# EUROPÄISCHE PATENTSCHRIFT

(11) **EP 4 017 770 B1**
(45) Veröffentlichungstag und Bekanntmachung des Hinweises auf die Patenterteilung: **01.11.2023**
(21) Anmeldenummer: 20754200.2
(22) Anmeldetag: 05.08.2020
(51) Int. Cl.: B60T 17/00, B60T 17/04

(54) **RÜCKSCHLAGVENTIL-VORRICHTUNG**
NON-RETURN VALVE DEVICE
DISPOSITIF DE CLAPET ANTIRETOUR

(30) Priorität: 21.08.2019 DE 102019122452
(43) Veröffentlichungstag der Anmeldung: 29.06.2022
(73) Patentinhaber: KNORR-BREMSE Systeme für Nutzfahrzeuge GmbH, 80809 München (DE)
(72) Erfinder: MOSER, Jürgen, 85302 Gerolsbach (DE)
(86) Internationale Anmeldenummer: PCT/EP2020/072023
(87) Internationale Veröffentlichungsnummer: WO 2021/032488

(56) Entgegenhaltungen:
- EP-A1- 1 669 125
- EP-B2- 1 669 125
- DE-A1- 10 329 401
- DE-A1-102007 011 246
- DE-A1-102009 030 897
- DE-A1-102010 010 882
- DE-A1-102016 208 355
- DE-B4-102007 011 246

## Beschreibung

Die vorliegende Erfindung betrifft eine Rückschlagventil-Vorrichtung, die insbesondere für eine Fluidaufbereitung in Nutzfahrzeugen geeignet ist.

Eine derartige Rückschlagventil-Vorrichtung kann in einer Vorrichtung zur Fluidaufbereitung, wie beispielsweise einer Lufttrocknerpatrone in Nutzfahrzeugen wie Lastkraftwagen und Traktoren zum Einsatz kommen. Diese verfügen häufig über einen oder mehrere Druckluftverbraucher wie zum Beispiel Bremssysteme oder Luftfederungen, die mit Druckluft versorgt werden müssen. Die Druckluft wird typischerweise von einem Kompressor, zum Beispiel einem von einem Antriebsmotor des Fahrzeugs angetriebenen Hubkolbenkompressor, zur Verfügung gestellt. Um einen störungsfreien Betrieb der Druckluftverbraucher zu gewährleisten, muss die vom Kompressor bereitgestellte Druckluft üblicherweise weiter aufbereitet werden. In den dafür vorgesehenen Druckluftaufbereitungsanlagen wird die Druckluft von Schmutzpartikeln, die bereits in der angesaugten Luft enthalten waren, sowie Öl- und Rußpartikeln, die während des Verdichtungsprozesses vom Kompressor in die Druckluft eingetragen werden, gereinigt und wird in der Druckluft vorhandene Feuchtigkeit abgeschieden. Zu diesem Zweck verfügen die Druckluftaufbereitungsanlagen von Nutzfahrzeugen in der Regel über Lufttrocknerpatronen, die die Druckluft entfeuchten und vorzugsweise auch Öl- und Schmutzpartikel aufnehmen können.

Herkömmliche Lufttrocknerpatronen, wie sie beispielsweise in der DE 10 2010 010882 A1, DE 10 2007 011246 A1, D3 DE 103 29 401 A1 und EP 1 669125 A1 beschrieben sind, weisen ein Patronengehäuse mit einem geschlossenen Gehäusedeckel, ein in dem Patronengehäuse aufgenommenes Trockenmittel, einen Befestigungsflansch zum Verschließen einer dem Gehäusedeckel abgewandten offenen Stirnseite des Patronengehäuses und Befestigen der Lufttrocknerpatrone an einem Druckluftaufbereitungssystem und eine innerhalb des Patronengehäuses angeordnete Filtereinrichtung, wie beispielsweise ein Koaleszenzfilter, zum Reinigen der Druckluft auf. Im Normalbetrieb der Lufttrocknerpatrone durchströmt die Druckluft zunächst die Filtereinrichtung, bevor sie in das Trockenmittel gelangt.

Für den Regenerationsbetrieb der Lufttrocknerpatrone, in dem die Lufttrocknerpatrone in umgekehrter Richtung durchströmt wird, ist in der Regel ein Bypass-Kanal zum Umgehen der Filtereinrichtung vorgesehen und ist als Bypass der Filtereinrichtung ein Rückschlagventil angeordnet. Der Bypass-Kanal dient dem Abblasen von an der Filtereinrichtung koalesziertem Öl bei einem Entlüftungsstoß. Herkömmliche Bypass-Vorrichtungen umfassen Rückschlagventile, die in der Regel aus einem Elastomer gebildet sind. Diese sind kostspielig und ihre Montage ist aufwendig.

Der Erfindung liegt die Aufgabe zugrunde, eine verbesserte Rückschlagventil-Vorrichtung zu schaffen, die einfach montiert werden kann.

Diese Aufgabe wird gelöst durch eine Rückschlagventil-Vorrichtung mit den Merkmalen des Anspruchs 1. Vorteilhafte Ausgestaltungen der Erfindung sind Gegenstand der abhängigen Ansprüche.

Die erfindungsgemäße Rückschlagventil-Vorrichtung weist zumindest einen ersten Teil eines Strömung-Kanals für ein Fluid sowie ein in dem Strömungskanal angeordnetes bewegbares insbesondere schnurförmiges Dichtungselement auf, das so konfiguriert ist, dass es zumindest teilweise zwischen einer geschlossenen Stellung und einer geöffneten Stellung bewegt werden kann, wobei in der geöffneten Stellung Fluidstrom durch den Strömungskanal zugelassen ist, während in der geschlossenen Stellung der Fluidstrom durch den Strömungs-Kanal durch Formschluss mit dem Dichtungselement gesperrt ist.

Die erfindungsgemäße Vorrichtung hat den Vorteil, dass das insbesondere schnurförmige Dichtungselement so eingerichtet ist, dass es zumindest abschnittsweise zwischen der geschlossenen Stellung und der geöffneten Stellung im Strömungs-Kanal verschoben oder versetzt oder auch durch Deformation bewegt werden kann, so dass für die Funktion des Dichtungselements eine Befestigung am Strömungs-Kanal nicht erforderlich ist. Dadurch kann das Dichtungselement sehr einfach und ohne Befestigungsmittel aufgebaut sein. Zudem kann der Aufbau des Dichtungselements sehr platzsparend sein.

Die erfindungsgemäße Vorrichtung kann beispielsweise in Vorrichtungen zur Aufbereitung von Fluiden, wie Luft, insbesondere Druckluft, oder Gas, wie beispielsweise in Lufttrocknerpatronen verwendet werden. Denkbar ist auch eine Verwendung in hydraulischen oder pneumatischen Vorrichtungen für Fahrzeuge, insbesondere Nutzfahrzeuge, in welchen Vorrichtungen, die auf dem Prinzip eines Rückschlagventils funktionieren, eingesetzt werden können.

Gemäß einer weiteren Ausführungsform weist die Vorrichtung weiter ein Gehäuse und eine im Gehäuse angeordnete Fluidbearbeitungsvorrichtung auf, die in einem Strömungsweg des Fluids positioniert ist, wobei der Strömungskanal einen Bypass für den Strömungsweg bildet. Die Vorrichtung kann beispielsweise in einer Lufttrocknerpatrone verwendet werden.

Der zweite Teil des Strömungskanals kann komplementär zum ersten Teil des Strömungskanals und ebenfalls Teil der Vorrichtung oder auch an einem anderen Teil, wie beispielsweise einem Fluidaufbereitungssystem eines Nutzfahrzeugs, angeordnet sein oder einen Teil davon bilden.

Gemäß einer Ausführungsform ist das Dichtungselement formschlüssig mit der Vorrichtung zur Fluidaufbereitung verbunden und an dieser gehalten. Dies hat den Vorteil, dass das Dichtungselement im Vergleich zu herkömmlichen Rückschlagventilen nicht speziell an der Vorrichtung befestigt werden muss. Die Montage bzw. der Austausch des Dichtungselements kann somit einfach durchgeführt werden. Darüber hinaus kann das Dichtungselement einfach hergestellt werden, da es keine Elemente für seine Befestigung an der Vorrichtung aufweisen muss. Denkbar ist es, beispielsweise ein ringförmiges Dichtungselement entlang eines ebenfalls ringförmig ausgebildeten Strömungskanals anzuordnen, wobei das Dichtungselement mit einem Übermaß oder größerem Umfang ausgebildet ist, als dem des Strömungskanals, sodass es aufgrund des Übermaßes bzw. oder größeren Umfangs am das Dichtungselement umgebenden Strömungskanal gehalten wird und diesen abdichtet. Alternativ wäre es ebenfalls denkbar ein ringförmiges Dichtungselement bereitzustellen, das einen ringförmigen Strömungskanal umgibt und an diesem aufgrund eines Untermaßes oder geringeren Umfangs des Dichtungselements als dem des Strömungskanals gehalten wird und diesen abdichtet. Bezüglich des Strömungskanals wäre es denkbar, diesen in Form von mehreren ringförmig angeordneten Öffnungen oder Abschnitten auszubilden.

Gemäß noch einer weiteren Ausführungsform ist das Dichtungselement ein O-Ring oder ein Abschnitt desselben. Ein Vorteil einer Verwendung eines O-Rings als Dichtungselement ist, dass dieser als Massenprodukt günstig hergestellt werden kann. Zudem kann der O-Ring in die Vorrichtung eingelegt werden, ohne dass eine Fixierung desselben in der Vorrichtung benötigt wird. Insbesondere kann der O-Ring ohne Spezialwerkzeug montiert werden. Darüber hinaus kann ein Trägerteil der Vorrichtung für den O-Ring ohne spezielle Fixierungsgeometrie vereinfacht gestaltet werden. Durch eine geeignete Gegenkontur für den O-Ring kann die maximal mögliche Quellung des O-Rings kompensiert und somit ein günstigerer O-Ringwerkstoff verwendet werden. Der Strömungskanal kann eine zum Dichtungselement bzw. O-Ring komplementäre Form aufweisen, insbesondere ebenfalls ringförmig ausgebildet sein. Das Dichtungselement kann durch ein Übermaß am Strömungskanal gehalten sein, sodass der Strömungskanal ohne Beaufschlagung durch ein Fluid abgedichtet ist. Dieser Aufbau eignet sich insbesondere für eine Vorrichtung, bei der ein ringförmiger Strömungskanal das ringförmige Dichtungselement umgibt. Alternativ könnte der O-Ring auch einen ringförmigen Strömungskanal umgeben und aufgrund eines geringeren Umfangs daran dichtend
gehalten sein.

Gemäß einer anderen Ausführungsform weist das Dichtungselement eine längliche Form, eine Stab- oder Schlauchform mit rundem, eckigem, ovalem oder elliptischem Querschnitt auf.

Gemäß der Erfindung ist das Dichtungselement bewegbar zwischen zwei Flächen angeordnet, von welchen eine erste ein Teil des zumindest einen Teil des Bypass-Kanals ist oder diesen bildet. Der Fluidstrom durch den Bypass-Kanal kann mittels Formschluss zwischen dem Dichtungselement und zumindest einer der Flächen gesperrt werden. Die andere Fläche kann ein weiterer Teil des zumindest einen Teil des Bypass-Kanals sein oder diesen bilden und der ersten gegenüberliegend angeordnet sein. Eine oder beide Flächen können strukturiert sein und eine oder mehrere Kanten, Erhöhungen oder Vertiefungen aufweisen. Beispielswiese kann eine der Flächen die Form einer Nut, die durch zumindest zwei Kanten und eine Fläche gebildet ist, aufweisen, insbesondere als eine Ringnut oder ein Teil davon ausgebildet sein. Die andere, zweite Fläche kann ebenfalls ein Teil der Vorrichtung zur Druckluftaufbereitung sein, kann jedoch auch ein Teil einer weiteren Vorrichtung sein, wie eines Druckluftaufbereitungssystems, mit dem die Vorrichtung zur Druckluftaufbereitung zur Druckluftaufbereitung verbunden wird.

Gemäß noch einer anderen Ausführungsform ist weist die Vorrichtung zur Fluidaufbereitung eine zylindrische Form auf, wie beispielsweise eine Patrone, insbesondere eine Lufttrocknerpatrone. Andere Formen wie zum Beispiel eine kubische oder Quaderform sind ebenfalls denkbar.

Gemäß noch einer Ausführungsform entspricht der Abstand zwischen den beiden Flächen entlang der Bewegungsrichtung des Dichtungselements abschnittsweise der Höhe oder dem Durchmesser des Dichtungselements, ist größer oder geringer als die Höhe oder der Durchmesser des Dichtungselements oder ändert sich entlang der Bewegungsrichtung des Dichtungselements gemäß einer Kombination aus zwei oder mehreren Abschnitten mit einem oder mehreren vorstehend genannten Abständen.

Gemäß einer Ausführungsform ist der Abstand zwischen den beiden Flächen entlang der Bewegungsrichtung des Dichtungselements zumindest in einem Abschnitt größer als die Höhe oder der Durchmesser des Dichtungselements, so dass ein Fluidstrom zwischen zumindest einer der beiden Flächen und dem Dichtungselement am Dichtungselement vorbeiströmen kann, wenn das Dichtungselement in diesem Abschnitt positioniert ist.

Gemäß einer weiteren Ausführungsform erstrecken sich zwischen den Flächen mit einem Winkel oder senkrecht zur Bewegungsrichtung des Dichtungselements eine oder mehrere Anlageflächen oder Dichtungskanten, durch welche die Bewegung des Dichtungselements begrenzt wird. Zwischen der einen oder den mehreren Anlageflächen oder Dichtungskanten kann das Dichtungselement bei einer Anlage daran den Strömungskanal formschlüssig abdichten oder sperren. Gegebenenfalls wird das Dichtungselement deformiert, insbesondere gestaucht.

Gemäß noch einer anderen Ausführungsform sind eine oder mehrere Öffnungen für den Durchgang des Fluidstroms in einer sich mit einem Winkel oder senkrecht zwischen den Flächen erstreckenden Wand angeordnet, wobei ein Fluidstrom durch das Dichtungselement gesperrt ist, wenn das Dichtungselement die eine oder die mehreren Öffnungen verschließt.

Gemäß einer anderen Ausführungsform sind in einer oder beiden Flächen eine oder mehrere Öffnungen oder Vertiefungen ausgebildet.

Gemäß noch einer weiteren Ausführungsform weist der Strömungskanal der Vorrichtung eine oder mehrere Öffnungen für den Durchgang des Fluidstroms auf, wobei bei Positionierung des Dichtungselements an einer der Öffnungen der einen oder mehreren Öffnungen des Strömungskanals, diese durch das Dichtungselement verschlossen und der Fluidstrom durch den Strömungskanal gesperrt ist.

Gemäß einer weiteren Ausführungsform weist der Strömungskanal der Vorrichtung eine oder mehrere Öffnungen für den Durchgang des Fluidstroms auf, wobei nach einer Bewegung zwischen den Flächen und über eine der Öffnungen der einen oder mehreren Öffnungen des Strömungskanals in einer der Flächen oder Kanten hinweg das Dichtungselement so im Strömungskanal positioniert ist, dass der Fluidstrom durch den Strömungskanal gesperrt ist.

Gemäß noch eine anderen Ausführungsform weist der Strömungskanal der Vorrichtung eine oder mehrere Öffnungen für den Durchgang des Fluidstroms auf, wobei nach einer Bewegung zwischen den Flächen und über eine der Öffnungen der einen oder mehreren Öffnungen des Strömungskanal in einer der Flächen hinweg das Dichtungselement so im Strömungskanal positioniert ist, dass der Fluidstrom durch den Strömungskanal zugelassen ist.

Gemäß noch einer anderen Ausführungsform weist die Vorrichtung zwei konzentrisch zu einer Längsachse der Vorrichtung angeordnete Flächen auf, die im Verhältnis zur Längsachse der Vorrichtung senkrecht oder geneigt sind und wobei in zumindest einer der Flächen mehrere ringförmig angeordnete Öffnungen ausgebildet sind, wobei in der geschlossenen Stellung des Dichtungselement ein Fluidstrom durch zumindest eine der Öffnungen durch ein ringförmiges zwischen den Flächen angeordnetes Dichtungselement gesperrt ist, das die ringförmig angeordneten Öffnungen umgibt, und in der geöffneten Stellung des Dichtungselements ein Fluidstrom durch zumindest eine der Öffnungen zugelassen ist, indem das ringförmige Dichtungselement so angeordnet ist, dass sich zumindest ein Abschnitt des Dichtungselements zwischen der zumindest einen Öffnung und der Längsachse der Vorrichtung befindet. Anstelle der konzentrisch zu einer Längsachse der Vorrichtung angeordneten Flächen bzw. Ringflächen könnte jedoch auch ein Ringspalt oder eine Ringnut verwendet werden, in dem bzw. in der das Dichtungselement angeordnet ist. Denkbar sind anstelle vollständiger Ringflächen, - spalte oder -nuten auch eine oder mehrere ringförmige Flächen, Spalte oder Nuten, die sich nur über einen Winkelbereich wie beispielsweise 10°, 25°, 45° und Vielfache davon erstrecken.

Gemäß einer weiteren Ausführungsform kann das Dichtungselement mittels eines Fluids aus der geöffneten Stellung in die geschlossene Stellung oder von der geschlossenen Stellung in die geöffnete Stellung bewegt werden.

Gemäß noch einer weiteren Ausführungsform kann das Dichtungselement durch seine Elastizität von der geschlossenen Stellung in die geöffnete Stellung oder von der geöffneten Stellung in die geschlossene Stellung bewegt werden.

Gemäß einer anderen Ausführungsform ist ein erster Teil des Strömungskanal zum Umgehen der Fluidaufbereitungsvorrichtung durch einen Teil eines Filters, Filtergehäuses oder einer Fluidaufbereitungsvorrichtung gebildet. Dieser Teil kann mit einem dazu komplementären Teil des Strömungskanal, der ebenfalls ein Teil der Vorrichtung zur Fluidaufbereitung oder auch durch eine andere Komponente, wie beispielsweise ein Fluidaufbereitungssystem eines Nutzfahrzeugs gebildet sein kann, zusammen gesetzt werden, um den Strömungskanal für den Fluidstrom zu bilden.

Weitere Merkmale, Eigenschaften und Vorteile der Erfindung ergeben sich aus der folgenden Beschreibung von Ausführungsformen der Erfindung anhand der beigefügten Zeichnung in der
- Fig. 1: eine Schnittansicht einer Vorrichtung zur Druckluftaufbereitung gemäß einer Ausführungsform zeigt;
- Fig. 2A-2C: schematische Schnittansichten von Vorrichtungen zur Druckluftaufbereitung gemäß Ausführungsformen der Erfindung zeigen; und
- Fig. 3A-3B: schematische Schnittansichten von Vorrichtungen zur Druckluftaufbereitung gemäß einer weiteren Ausführungsformen der Erfindung zeigen.

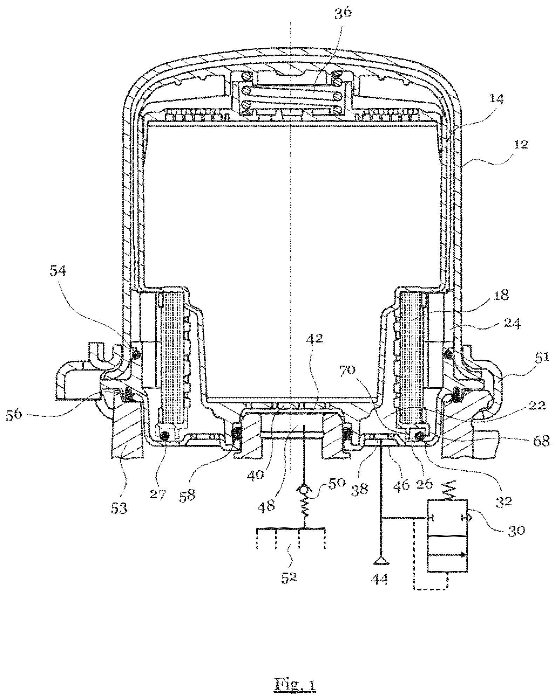

Figur 1 zeigt den Aufbau einer Vorrichtung 10 zur Druckluftaufbereitung gemäß einem ersten Ausführungsbeispiel. Die Vorrichtung 10 zur Druckluftaufbereitung umfasst ein Gehäuse 12 mit einem im Wesentlichen zylindrischen Wandabschnitt. In dem Gehäuse 12 ist ein Trockeneinsatz 14 angeordnet, in dem sich ein Trockenmittel (nicht dargestellt) befindet. Unterhalb des Trockeneinsatzes 14 ist eine Druckluftaufbereitungskomponente 18, wie beispielsweise ein Koaleszenzfilter angeordnet, das sich über den gesamten Umfang der Vorrichtung 10 zur Druckluftaufbereitung erstreckt. Unterhalb des Koaleszenzfilters befindet sich ein Bypass-Kanal 26, in dem ein Dichtungselement 27 in Form eines O-Rings 2angeordnet ist, der einen Weg von dem Vorfilterbereich 22 zu dem Nachfilterbereich 24 entlang einer mit Durchgangsöffnungen 38 versehenen Metallplatte 32 sperrt und in Abhängigkeit der Druckverhältnisse die Strömung in die umgekehrte Richtung erlaubt. Der Bypass-Kanal 26 erstreckt sich zwischen der Unterseite des Koaleszenzfilters und der Metallplatte 32. Der O-Ring wird in die Vorrichtung 10 zur Druckluftaufbereitung eingelegt, ohne dass eine spezielle Fixierung desselben in der Vorrichtung 10 notwendig ist. Insbesondere kann der O-Ring ohne Spezialwerkzeug montiert werden. Ein Trägerteil der Vorrichtung 10 zur Druckluftaufbereitung für den O-Ring kann ohne spezielle Fixierungsgeometrie vereinfacht gestaltet werden. Bei der gezeigten Ausführungsform wird das Trägerteil durch eine äußere Dichtungskante 68 gebildet an dem der O-Ring formschlüssig gehalten ist.

Der Trockeneinsatz 14 ist nach unten durch ein Sekundärfilter 40 und eine darunter liegende mit Öffnungen versehene Platte 32 begrenzt. In der Peripherie der Vorrichtung 10 zur Druckluftaufbereitung beziehungsweise mit dieser integriert verbaut ist ein zu einem Druckregler gehöriges Ablasssicherheitsventil 30 vorgesehen. Dieses ist parallel zu einer Druckluftversorgung 44 am Eingang 46 der Vorrichtung 10 zur Druckluftaufbereitung angeschlossen. An einem Ausgang 48 der Vorrichtung 10 zur Druckluftaufbereitung sind über ein Rückschlagventil 50 Druckluftverbraucher, wie beispielsweise die hier angedeuteten vier Bremskreise 52 angeschlossen. Der Trockeneinsatz 14 wird von oben durch eine Feder 36 mit Kraft beaufschlagt, um eine dichte Packung des Trockenmittels in dem Trockeneinsatz 14 zu gewährleisten. Es sind diverse Dichtungen 54, 56, 58 vorgesehen, wobei beispielsweise die Dichtung 58 den Eingang 46 und den Ausgang 48 gegeneinander abdichtet. Mittels eines Flansches und Bajonettverschlusses 51 wird die Vorrichtung 10 zur Druckluftaufbereitung mit einem in Fig. 1 angedeuteten Luftaufbereitungssystem 53 verbunden. Gemäß einer anderen Ausführungsform kann die Vorrichtung 10 zur Druckluftaufbereitung mit dem Luftaufbereitungssystem 53 auch über ein Gewinde verbunden sein.

Im Normalbetrieb wird Druckluft von der Druckluftversorgung 44 zum Eingang 46 geliefert. Diese Druckluft strömt durch Durchgangsöffnungen 38 in der Metallplatte in den Vorfilterbereich 22 und nachfolgend durch das Koaleszenzfilter in den Nachfilterbereich 24. Fremdpartikel werden von dem Koaleszenzfilter herausgefiltert und sammeln sich am Boden des Nachfilterbereichs 24 und im Bypass-Kanal 26 an. Die Luft strömt weiter entlang der Wandung des Gehäuses 12 nach oben und dann von oben in den Trockeneinsatz 14 ein, um das Trockenmittel zu durchströmen und in diesem getrocknet zu werden. Nachfolgend strömt die Luft durch das Sekundärfilter 40 und die mit Öffnungen versehene Platte 42 in Richtung Ausgang 48, um von dort über das Rückschlagventil 50 zu den Verbrauchern, das heißt insbesondere zu den Bremskreisen 52 zu strömen. Das durch den O-Ring gebildete Dichtungselement 27 wird durch die Luft mit Druck beaufschlagt und sperrt den Bypass-Kanal 26 mittels Formschluss mit der Dichtungskante 68 und dem Boden bzw. der Metallplatte 32 des Bypass-Kanals 26.

Öffnet nun das zum Druckregler gehörige Ablasssicherheitsventil 30, so bricht der Druck im Vorfilterbereich 22 zusammen. Im Nachfilterbereich 24 liegt somit ein erheblich höherer Druck vor als im Vorfilterbereich 22 vor, so dass der den Bypass-Kanal 26 formschlüssig sperrende O-Ring radial nach innen, in Richtung einer inneren Dichtungskante 70 des Bypass-Kanals 26 gedrückt wird. Dabei wird der Bypass-Kanal 26 durch eine translatorische Bewegung zumindest eines Teils des O-Rings 27 geöffnet und ein Transport der angesammelten Fremdpartikel aus dem Nachfilterbereich 24 in den Vorfilterbereich 22 und nachfolgend über das Ablasssicherheitsventil 30 zur Außenseite des Luftaufbereitungssystem 53 gestattet.

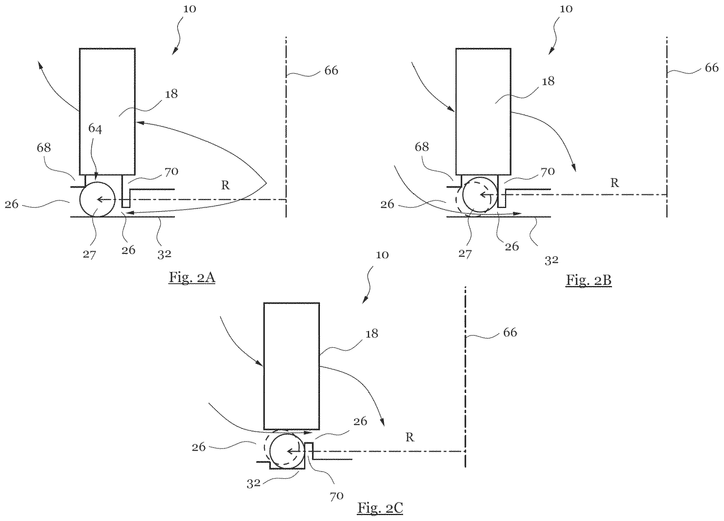

Figur 2a-2c zeigen schematisch zwei Ausführungsformen einer Vorrichtung 10 zur Druckluftaufbereitung mit einer Luftaufbereitungskomponente 18, wie beispielsweise einem oder mehreren Filtern. Die dargestellte Vorrichtung 10 zur Druckluftaufbereitung weist einen Bypass-Kanal 26 mit einem darin angeordneten Dichtungselement 27 auf. Der Bypass-Kanal 26 ist zumindest abschnittweise durch die Unterseite der Luftaufbereitungskomponente 18 und eine dieser gegenüberliegenden Metallplatte 32 an der Unterseite der Vorrichtung 10 zur Druckluftaufbereitung gebildet.

Gemäß der in Figur 2A dargestellten Ausführungsform ist das Dichtungselement 27 durch einen O-Ring gebildet, der sich in einer Ringnut 64 kreissymmetrisch zusammen mit dieser um eine Längsachse 66 der Vorrichtung 10 zur Druckluftaufbereitung erstreckt. In Fig. 2A sind der O-Ring und die Ringnut 64 im Querschnitt gezeigt und erstrecken sich beide senkrecht zur Abbildungsebene. Sowohl der O-Ring als auch die Ringnut 64 sind hinsichtlich der Vorrichtung nur halbseitig dargestellt und können sich jedoch kreisförmig bis über 360° erstrecken, wobei sie geschlossene Ringe bilden. Es ist jedoch auch denkbar sowohl die Ringnut 64 als auch den O-Ring so zu konfigurieren, dass sie sich nur über einen Sektor eines Kreises erstrecken, wie z.B. 5°, 25°, 45° oder ein Vielfaches davon. Auch eine sich linear oder geradlinig erstreckende Nut 64 und ein entsprechendes darin angeordnetes Dichtungselement 27 sind denkbar.

Die bei der gezeigten Ausführungsform nach unten offene Ringnut 64 wird durch eine äußere Dichtungskante 68 sowie eine innere Dichtungskante 70 begrenzt. Die äußere Dichtungskante 68 weist eine Höhe auf, die geringer als die halbe maximale Höhe des in der Figur 2A dargestellten Bypass-Kanals 26 und auch geringer als die halbe Höhe des O-Ring ist, während die innere Dichtungskante 70 eine Höhe aufweist, die größer als die halbe maximale Höhe des in der Figur 2A dargestellten Bypass-Kanals 26 und auch größer als die halbe Höhe des O-Rings ist.

Der O-Ring weist einen äußeren Radius R auf, der etwa dem des äußeren Randes der Ringnut 64 und der äußeren Dichtungskante 68 entspricht oder etwas größer als dieser ist, sodass der O-Ring ohne Beaufschlagung mit Druckluft an der äußeren Dichtungskante 68 des Bypass-Kanals 26 und dem Boden des Bypass-Kanals 26 formschlüssig anliegt. Durch den Formschluss wird der O-Ring an der Vorrichtung 10 zur Druckluftaufbereitung, insbesondere an deren äußerer Dichtungskante 68 gehalten. Der Radius des O-Rings kann auch so gewählt sein, so dass der O-Ring bereits ohne Beaufschlagung mit Druckluft eine Stauchung erfährt. Insbesondere kann der äußere Radius des O-Rings so gewählt werden, dass er um 2%, 5%, 10% oder 15% größer als der äußere Radius der Ringnut 64 ist.

Bei der in Fig. 2A gezeigten Position des Dichtungselements 27 sperrt der O-Ring im Formschluss mit der äußeren Dichtungskante 68 und der unteren Fläche des Bypass-Kanals 26 den Durchgang von Druckluft von der Seite der inneren Dichtungskante 70, die zwischen dem unteren Ende derselben und der unteren Fläche in den Bypass-Kanal 26 gelangt und den O-Ring in Sperrrichtung mit Druck beaufschlagt, während gleichzeitig die Luftaufbereitungskomponente 18 von der Druckluft durchströmt wird. Durch die Druckluft kann der O-Ring abhängig von der Stärke des Drucks gegebenenfalls auch reversibel deformiert werden. Dies entspricht dem Normalbetrieb der Vorrichtung 10 zur Druckluftaufbereitung.

Es sind jedoch auch Ausführungsformen denkbar, bei welchen der O-Ring einen inneren Radius aufweist, der dem der inneren Dichtungskante 70 entspricht oder sogar etwas geringer als dieser ist, wie beispielsweise um 2%, 5%, 10% oder 15%, so dass der O-Ring ohne Beaufschlagung mit Druckluft an der inneren Dichtungskante 70 gehalten wird und im Formschluss mit der inneren Dichtungskante 70 und der Unterseite des Bypass-Kanals 26 diesen sperrt. Eine derartige Anordnung kann insbesondere für Ausführungsformen sinnvoll sein, bei welchen im Normalbetrieb der O-Ring von der Seite der äu-βeren Dichtungskante 68 mit Druckluft in Sperrrichtung beaufschlagt wird und dadurch zusätzlich gegen die innere Dichtungskante 70 und die Unterseite des Bypass-Kanals 26 gedrückt wird, während die Luftaufbereitungskomponente 18 von der Druckluft durchströmt wird, und andererseits im Regenerationsbetrieb bei einer Druckluftbeaufschlagung von der Seite der inneren Dichtungskante 70 der O-Ring von der inneren Dichtungskante 70 weggedrückt wird und Druckluft unter Umgehung der Luftaufbereitungskomponente 18 durch den Bypass-Kanal 26 strömt.

In Figur 2B ist die Vorrichtung gemäß derselben Ausführungsform wie in Fig. 2A gezeigt, wobei jedoch die Position des Dichtungselements 27 entsprechend dem Regenerationsbetrieb der Vorrichtung 10 zur Luftaufbereitung von der äußeren Dichtungskante 68 versetzt ist, da der O-Ring im Bypass-Kanal 26 unter Umgehung der Luftaufbereitungskomponente 18 mit Druckluft beaufschlagt wird, so dass der Formschluss zwischen dem Bypass-Kanal 26 und dem O-Ring gelöst ist, der Bypass-Kanal 26 geöffnet ist und Druckluft zwischen dem O-Ring und der unteren Fläche und ggf. auch zwischen dem O-Ring und der oberen Fläche des Bypass-Kanals 26 an der inneren Dichtungskante 70 aus dem Bypass-Kanal 26 entweichen kann. Dabei wird der O-Ring in Richtung und ggf. gegen die innere Dichtungskante 70 gedrückt, ohne dass der Bypass-Kanal 26 gesperrt ist.

Gemäß der in Fig. 2A und 2B gezeigten Ausführungsform weist die Oberseite des Bypass-Kanals 26 eine strukturierte Fläche auf, während die Unterseite des Bypass-Kanals 26 durch eine glatte Fläche gebildet ist. Dementsprechend ist der Abstand zwischen den beiden Flächen auf der Ober- bzw. Unterseite des Bypass-Kanals 26 entlang der Bewegungsrichtung des Dichtungselements 26, insbesondere an der äußeren Dichtungskante 68 und im Abschnitt des Bypass-Kanals 2 links davon in der Figur 2A geringer als die Höhe oder der Durchmesser des Dichtungselements 27, während er im mittleren Abschnitt in der Figur 2A zwischen der inneren Dichtungskante 70 und der äußeren Dichtungskante 68, in dem das Dichtungselement 27 angeordnet ist, größer als die Höhe oder der Durchmesser des Dichtungselements 27 ist. Rechts neben dem mittleren Abschnitt schließt sich die innere Dichtungskante 70 an, wobei zwischen deren unteren Ende und der Unterseite des Bypass-Kanals 26 eine Öffnung für den Durchgang von Druckluft gebildet ist. Wird keine Druckluft von der Seite der inneren Dichtungskante 70 in den Bypass-Kanal 26 zugeführt, wird das Dichtungselement 27 an der äußeren Dichtungskante 68 am linken Rand des mittleren Abschnitts gehalten.

In Figur 2B ist die Situation dargestellt, in welcher das Dichtungselement 27 von der Seite der äußeren Dichtungskante 68 mit Druckluft beaufschlagt wird, wobei in diesem Fall das Dichtungselement 27 in Richtung der inneren Dichtungskante 70 gedrückt wird und dabei der Formschluss zwischen dem O-Ring und dem Bypass-Kanal 26 gelöst wird, so dass der Bypass-Kanal 26 öffnet und Druckluft unter Umgehung der Druckluftaufbereitungskomponente aus dem Bypass-Kanal 26 entweichen kann.

In Figur 2C ist eine weitere Ausführungsform der Vorrichtung 10 zur Druckluftaufbereitung gezeigt, die ähnlich zu der in den Figuren 2A und 2B gezeigten Ausführungsform ist. Im Vergleich zur in den Figuren 2A und 2B gezeigten Ausführungsform befindet sich die strukturierte Fläche oder Ringnut 64 gegenüberliegend der Luftbearbeitungskomponente 18 an dem durch die Metallplatte 32 gebildeten Teil des Bypass-Kanals 26. Der andere durch die Unterseite der Luftbearbeitungskomponente 18 gebildete Teil des Bypass-Kanals 26 weist dagegen eine glatte Fläche auf. Die Struktur des Bypass-Kanals 26 bzw. die Ringnut 64 ist somit gemäß der in Fig. 2C gezeigten Ausführungsform im Vergleich zu der des Bypass-Kanals 26 gemäß der in den Figuren 2A und 2B gezeigten Ausführungsform auf der anderen Seite des Bypass-Kanals 26 angeordnet. Denkbar wäre es auch komplementäre oder sich ergänzende Strukturen zur Bildung einer Nut für das Dichtungselement 27 auf beiden Seiten des Bypass-Kanals 26 vorzusehen.

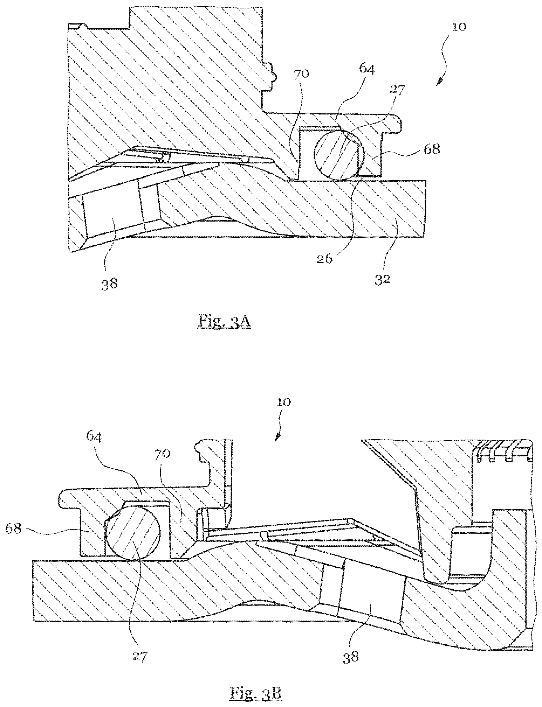

Die Figuren 3A und 3B zeigen eine weitere Ausführungsform der Vorrichtung 10 zur Druckluftaufbereitung. Gemäß dieser Ausführungsform weist die Vorrichtung 10 zur Druckluftaufbereitung eine von einer Druckluftaufbereitungskomponente unabhängige Ringnut 64 auf, in welcher ein Dichtungselement 27 in Form eines O-Rings angeordnet ist. Die Ringnut 64 ist auf der Innenseite der Vorrichtung 10 zur Druckluftaufbereitung durch eine innere Dichtungskante 70 und auf der Außenseite durch eine äußere Dichtungskante 68 begrenzt. Der Bypass-Kanal 26 auf der Unterseite eine ebene Fläche auf, die durch eine Metallplatte 32 gebildet ist. Die Metallplatte 32, die zugleich die Unterseite der Vorrichtung 10 bildet, weist eine Durchgangsöffnung 38 auf, die einen Einlass 46 für Druckluft für die Vorrichtung 10 zur Luftaufbereitung bildet. Sowohl die Fig. 3A als auch die Figur 3B zeigen das Dichtungselement 27 bzw. den O-Ring in der den Bypass-Kanal 26 sperrenden Position im Regelbetrieb, in dem Druckluft durch die Öffnung 38 in die Vorrichtung strömt und den O-Ring gegen die äußere Dichtungskante 68 drückt. Dabei wird der O-Ring etwas deformiert insbesondere gestaucht. Am Übergang zwischen der äußeren Dichtungskante 68 und dem Boden der Nut 64 ist in der Nut ein Vorsprung vorgesehen, der den O-Ring gegen die Unterseite des Bypass-Kanals 26 drückt, um im Regelbetrieb einen besseren Formschluss zwischen dem O-Ring und der Unterseite des Bypass-Kanals 26 zu erreichen. Bei beiden, in den Fig. 3A und 3B gezeigten Ausführungsformen ist die Funktionsweise dieselbe, wie bei den in den Figuren 2A-2C gezeigten Ausführungsformen.

An der Erfindung können Modifizierungen und Änderungen vorgenommen werden, ohne den Umfang der Erfindung zu verlassen.

### Bezugszeichenliste

- 10: Vorrichtung zur Druckluftaufbereitung
- 12: Gehäuse
- 14: Trockeneinsatz
- 18: Koaleszenzfilter
- 26: Strömungskanal
- 27: Dichtungselement
- 22: Vorfilterbereich
- 24: Nachfilterbereich
- 38: Durchgangsöffnung
- 32: Metallplatte
- 36: Feder
- 40: Sekundärfilter
- 42: mit Öffnungen versehene Platte
- 30: Ablasssicherheitsventil
- 44: Druckluftversorgung
- 46: Eingang
- 48: Ausgang
- 50: Rückschlagventil
- 51: Flansch, Bajonettverschluss
- 52: Bremskreise
- 53: Luftaufbereitungssystem
- 54: Dichtung
- 56: Dichtung
- 58: Dichtung
- 64: Ringnut
- 66: Längsachse
- 68: äußere Dichtungskante
- 70: innere Dichtungskante

## Patentansprüche

1. Rückschlagventil-Vorrichtung, aufweisend:
zumindest einen Teil eines Strömungskanals (26) für ein Fluid sowie ein in dem Strömungskanal (26) angeordnetes bewegbares schnurförmiges Dichtungselement (27), das eingerichtet ist, dass es zumindest teilweise zwischen einer geschlossenen Stellung und einer geöffneten Stellung bewegt werden kann, wobei in der geöffneten Stellung ein Fluidstrom durch den Strömungskanal zugelassen ist, während in der geschlossenen Stellung der Fluidstrom durch den Strömungs-Kanal durch Formschluss mit dem Dichtungselement gesperrt ist, **dadurch gekennzeichnet, dass** das Dichtungselement (27) bewegbar zwischen zwei Flächen angeordnet ist, von welchen eine erste ein Teil des zumindest einen Teil des Strömungskanals (26) ist oder diesen bildet, und der Fluidstrom durch den Strömungs-Kanal (26) mittels Formschluss zwischen dem Dichtungselement und zumindest einer der Flächen gesperrt werden kann.

2. Vorrichtung nach Anspruch 1, **dadurch gekennzeichnet, dass** die Vorrichtung weiter ein Gehäuse (14) und eine im Gehäuse (14) angeordnete Fluidbearbeitungsvorrichtung (18) aufweist, die in einem Strömungsweg des Fluids positioniert ist, wobei der Strömungskanal ein Bypass für den Strömungsweg ist.

3. Vorrichtung nach einem der Ansprüche 1 oder 2, **dadurch gekennzeichnet, dass** das Dichtungselement (27) formschlüssig mit der Vorrichtung (10) verbunden und an dieser gehalten ist.

4. Vorrichtung nach einem der Ansprüche 1 bis 3, **dadurch gekennzeichnet, dass** das Dichtungselement (27) ein O-Ring oder ein Abschnitt desselben ist.

5. Vorrichtung nach einem der Ansprüche 1 bis 4, **dadurch gekennzeichnet, dass** das Dichtungselement (27) eine längliche oder Schnur-Form, eine Stab- oder Schlauchform mit rundem, eckigem, ovalem oder elliptischem Querschnitt aufweist.

6. Vorrichtung nach Anspruch 1, **dadurch gekennzeichnet, dass** der Abstand zwischen den beiden Flächen entlang der Bewegungsrichtung des Dichtungselements (27) abschnittsweise der Höhe oder dem Durchmesser des Dichtungselements (27) entspricht, größer oder geringer als die Höhe oder der Durchmesser des Dichtungselements (27) ist oder sich entlang der Bewegungsrichtung des Dichtungselements (27) gemäß einer Kombination aus zwei oder mehreren Abschnitten mit einem oder mehreren vorstehend genannten Abständen ändert.

7. Vorrichtung nach einem der Ansprüche 1 oder 6, **dadurch gekennzeichnet, dass** der Abstand zwischen den beiden Flächen entlang der Bewegungsrichtung des Dichtungselements (27) zumindest in einem Abschnitt größer als die Höhe oder der Durchmesser des Dichtungselements (27) ist, so dass ein Fluidstrom zwischen zumindest einer der beiden Flächen und dem Dichtungselement (27) am Dichtungselement (27) vorbeiströmen kann, wenn das Dichtungselement (27) in diesem Abschnitt positioniert ist.

8. Vorrichtung nach einem der Ansprüche 1 oder 6 bis 7, **dadurch gekennzeichnet, dass** sich zwischen den Flächen mit einem Winkel oder senkrecht zur Bewegungsrichtung des Dichtungselements (27) eine oder mehrere Anlageflächen oder Dichtungskanten (68, 70) erstrecken, durch welche die Bewegung des Dichtungselements (27) begrenzt wird.

9. Vorrichtung nach einem der Ansprüche 1 oder 6 bis 8, **dadurch gekennzeichnet, dass** eine oder mehrere Öffnungen für den Durchgang des Fluidstroms in einer sich mit einem Winkel oder senkrecht zwischen den Flächen erstreckenden Wand angeordnet sind, wobei ein Fluidstrom durch das Dichtungselement (27) gesperrt ist, wenn das Dichtungselement (27) die eine oder die mehreren Öffnungen verschließt.

10. Vorrichtung nach einem der Ansprüche 1 oder 6 bis 9, **dadurch gekennzeichnet, dass** in einer oder beiden Flächen eine oder mehrere Öffnungen oder Vertiefungen ausgebildet sind.

11. Vorrichtung nach einem der Ansprüche 1 bis 10, **dadurch gekennzeichnet, dass** der Strömungs-Kanal der Vorrichtung eine oder mehrere Öffnungen für den Durchgang des Fluidstroms aufweist, wobei bei Positionierung des Dichtungselements (27) an einer der Öffnungen der einen oder mehreren Öffnungen des Strömungskanals (26), diese durch das Dichtungselement (27) verschlossen und der Fluidstrom durch den Strömungskanal (26) gesperrt ist.

12. Vorrichtung nach einem der Ansprüche 1 bis 11, **dadurch gekennzeichnet, dass** der Strömungskanal (26) der Vorrichtung eine oder mehrere Öffnungen für den Durchgang des Fluidstroms aufweist, wobei nach einer Bewegung zwischen den Flächen und über eine der Öffnungen der einen oder mehreren Öffnungen des Strömungskanals (26) in einer der Flächen hinweg das Dichtungselement (27) so im Strömungs-Kanal positioniert ist, dass der Fluidstrom durch den Strömungskanal (26) gesperrt oder zugelassen ist.

13. Vorrichtung nach einem der Ansprüche 1 bis 12, **dadurch gekennzeichnet, dass** die Vorrichtung zwei konzentrisch zu einer Längsachse der Vorrichtung angeordnete Flächen aufweist, die im Verhältnis zur Längsachse senkrecht oder geneigt sind, oder eine Nut aufweist und wobei in zumindest einer der Flächen oder in der Nut mehrere ringförmig angeordnete Öffnungen ausgebildet sind, wobei in der geschlossenen Stellung des Dichtungselements (27) ein Fluidstrom durch zumindest eine der Öffnungen durch ein ringförmiges zwischen den Flächen oder in der Nut angeordnetes Dichtungselement (27) gesperrt ist, das die ringförmig angeordneten Öffnungen umgibt, und in der geöffneten Stellung des Dichtungselements (27) ein Fluidstrom durch zumindest eine der Öffnungen zugelassen ist, indem das ringförmige Dichtungselement (27) so angeordnet ist, dass sich zumindest ein Abschnitt des Dichtungselements (27) zwischen der zumindest einen Öffnung und der Längsachse der Vorrichtung (10) befindet.

14. Vorrichtung nach einem der Ansprüche 1 bis 13, **dadurch gekennzeichnet, dass** das Dichtungselement (27) mittels eines Fluidstroms aus der geöffneten Stellung in die geschlossene Stellung oder von der geschlossenen Stellung in die geöffnete Stellung bewegt werden kann oder dass das Dichtungselement (27) durch seine Elastizität von der geschlossenen Stellung in die geöffnete Stellung oder von der geöffneten Stellung in die geschlossene Stellung bewegt werden kann.

15. Vorrichtung nach einem der Ansprüche 1 bis 14, bei welcher ein weiterer Teil des Strömungskanals (26), der dem einen Teil gegenüberliegt, durch einen Teil eines Filters, Filtergehäuses oder einer Luftaufbereitungsvorrichtung gebildet ist.

## Claims

1. A non-return valve device comprising:
at least one part of a flow channel (26) for a fluid and a movable, cord-like sealing element (27) that is arranged in the flow channel (26) and is configured such that it can be moved at least partially between a closed position and an open position, a fluid flow being admitted through the flow channel in the open position, whereas the fluid flow through the flow channel is blocked by means of an interference fit with the sealing element in the closed position,
**characterised in that** the sealing element (27) is arranged such that it can be moved between two surfaces, a first of these surfaces being or forming part of the at least one part of the flow channel (26), and it being possible to block the fluid flow through the flow channel (26) by means of an interference fit between the sealing element and at least one of the surfaces.

2. A device according to claim 1, **characterised in that** the device also has a housing (12) and a fluid processing device (18) that is arranged in the housing (12) and positioned in a flow path of the fluid, the flow channel being a bypass for the flow path.

3. A device according to either of claims 1 or 2, **characterised in that** the sealing element (27) is connected in an interference fit to and held on the device (10).

4. A device according to any one of claims 1 to 3, **characterised in that** the sealing element (27) is an O-ring or a portion of an O-ring.

5. A device according to any one of claims 1 to 4, **characterised in that** the sealing element (27) has an elongate or cord-like form or a rod-like or tubular form with a round, polygonal, oval or elliptical cross section.

6. A device according to claim 1, **characterised in that**, in portions, the distance between the two surfaces in the direction of movement of the sealing element (27) is equivalent to the height or the diameter of the sealing element (27), is greater than or less than the height or the diameter of the sealing element (27) or varies in the direction of movement of the sealing element (27) according to a combination of two or more portions with one or more of the aforementioned distances.

7. A device according to either of claims 1 or 6, **characterised in that**, in one portion at least, the distance between the two surfaces in the direction of movement of the sealing element (27) is greater than the height or the diameter of the sealing element (27) and that a fluid flow between at least one of the two surfaces and the sealing element (27) is therefore able to flow past the sealing element (27) when the sealing element (27) is positioned in this portion.

8. A device according to any one of claims 1 or 6 to 7, **characterised in that** one or more contact surfaces or sealing edges (68, 70) that limit the movement of the sealing element (27) extend between the surfaces at an angle or perpendicular to the direction of movement of the sealing element (27).

9. A device according to any one of claims 1 or 6 to 8, **characterised in that** one or more openings for the passage of the fluid flow are arranged in a wall that extends at an angle or perpendicularly between the surfaces, a fluid flow being blocked by the sealing element (27) when the sealing element (27) closes the one or more openings.

10. A device according to any one of claims 1 or 6 to 9, **characterised in that** one or more openings or recesses are formed in one or both surfaces.

11. A device according to any one of claims 1 to 10, **characterised in that** the flow channel of the device has one or more openings for the passage of the fluid flow, when the sealing element (27) is positioned at one of the one or more openings of the flow channel (26) this opening being closed by the sealing element (27) and the fluid flow through the flow channel (26) being blocked.

12. A device according to any one of claims 1 to 11, **characterised in that** the flow channel (26) of the device has one or more openings for the passage of the fluid flow, following a movement between the surfaces and over one of the one or more openings of the flow channel (26) in one of the surfaces the sealing element (27) being positioned in the flow channel such that the fluid flow through the flow channel (26) is blocked or permitted.

13. A device according to any one of claims 1 to 12, **characterised in that** the device has two surfaces that are arranged concentrically in relation to a longitudinal axis of the device and are perpendicular or inclined in relation to the longitudinal axis, or has a groove, a plurality of openings arranged in a ring being formed in at least one of the surfaces or in the groove, when the sealing element (27) is in the closed position a fluid flow through at least one of the openings being blocked by an annular sealing element (27) that is arranged between the surfaces or in the groove and surrounds the ring-shaped arrangement of openings, and when the sealing element (27) is in the open position a fluid flow being permitted through at least one of the openings by arranging the annular sealing element (27) such that at least one portion of the sealing element (27) is located between the at least one opening and the longitudinal axis of the device (10).

14. A device according to any one of claims 1 to 13, **characterised in that** the sealing element (27) can be moved from the open position to the closed position or from the closed position to the open position by means of a fluid flow or that the sealing element (27) can be moved from the closed position to the open position or from the open position to the closed position by means of its own elasticity.

15. A device according to any one of claims 1 to 14, in which a further part of the flow channel (26), which is located opposite the first part, takes the form of part of a filter, filter housing or air treatment device.

## Revendications

1. Dispositif de clapet antiretour, comportant :
au moins une partie d'un conduit (26) d'écoulement d'un fluide ainsi qu'un élément (27) d'étanchéité mobile, en forme de cordon et disposé dans le conduit (26) d'écoulement, qui est conçu de manière à pouvoir être déplacé au moins en partie entre une position fermée et une position ouverte, dans lequel, dans la position ouverte, un courant de fluide est admis dans le conduit d'écoulement, tandis que dans la position fermée, le courant de fluide dans le conduit d'écoulement est arrêté par complémentarité de forme avec l'élément d'étanchéité, **caractérisé en ce que** l'élément (27) d'étanchéité est monté mobile entre deux surfaces, dont une première forme une partie de la au moins une partie du conduit (26) d'écoulement ou celui-ci, et le courant de fluide dans le conduit (26) d'écoulement peut être arrêté au moyen d'une complémentarité de forme entre l'élément d'étanchéité et la au moins une des surfaces.

2. Dispositif suivant la revendication 1, **caractérisé en ce que** le dispositif a en outre un boîtier (14) et un dispositif (18) de traitement de fluide, qui est disposé dans le boîtier (14) et qui est en position dans un chemin d'écoulement du fluide, dans lequel le conduit d'écoulement est une dérivation du chemin d'écoulement.

3. Dispositif suivant l'une des revendications 1 ou 2, **caractérisé en ce que** l'élément (27) d'étanchéité est relié à complémentarité de forme au dispositif (10) et est maintenu sur celui-ci.

4. Dispositif suivant l'une des revendications 1 à 3, **caractérisé en ce que** l'élément (27) d'étanchéité est un joint torique ou une partie de celui-ci.

5. Dispositif suivant l'une des revendications 1 à 4, **caractérisé en ce que** l'élément (27) d'étanchéité a une forme longitudinale ou une forme en cordon, une forme en barre ou une forme en conduit souple de section transversale circulaire, polygonale, ovale ou elliptique.

6. Dispositif suivant la revendication 1, **caractérisé en ce que** la distance entre les deux surfaces, suivant la direction de déplacement de l'élément (27) d'étanchéité, correspond, par endroits, à la hauteur ou au diamètre de l'élément (27) d'étanchéité, est plus grande ou plus petite que la hauteur ou le diamètre de l'élément (27) d'étanchéité ou se modifie suivant la direction de déplacement de l'élément (27) d'étanchéité suivant une combinaison de deux ou de plusieurs tronçons ayant une ou plusieurs distances mentionnées précédemment.

7. Dispositif suivant l'une des revendications 1 ou 6, **caractérisé en ce que** la distance entre les deux surfaces suivant la direction de déplacement de l'élément (27) d'étanchéité est, au moins dans un tronçon, plus grande que la hauteur ou le diamètre de l'élément (27) d'étanchéité, de sorte qu'un courant de fluide peut passer devant l'élément (27) d'étanchéité entre au moins l'une des deux surfaces et l'élément (27) d'étanchéité, lorsque l'élément (27) d'étanchéité est en position dans ce tronçon.

8. Dispositif suivant l'une des revendications 1 ou 6 à 7, **caractérisé en ce qu'**il s'étend entre les surfaces, en faisant un angle ou perpendiculairement à la direction de déplacement de l'élément (27) d'étanchéité, une ou plusieurs surfaces de contact ou bords (68, 70) d'étanchéité, par lesquels le déplacement de l'élément (27) d'étanchéité est limité.

9. Dispositif suivant l'une des revendications 1 ou 6 à 8, **caractérisé en ce qu'**une ou plusieurs ouvertures pour le passage du courant de fluide sont disposées dans une paroi s'étendant en faisant en angle ou perpendiculairement entre les surfaces, dans lequel un courant de fluide est arrêté par l'élément (27) d'étanchéité, si les éléments (27) d'étanchéité ferment la une ou les plusieurs ouvertures.

10. Dispositif suivant l'une des revendications 1 ou 6 à 9, **caractérisé en ce que**, dans l'une ou les deux surfaces, sont formées une ou plusieurs ouvertures ou cavités.

11. Dispositif suivant l'une des revendications 1 à 10, **caractérisé en ce que** le conduit d'écoulement du dispositif a une ou plusieurs ouvertures pour le passage du courant de fluide, dans lequel, lors de la mise en position de l'élément (27) d'étanchéité sur l'une des ouvertures de l'une ou des plusieurs ouvertures du conduit (26) d'écoulement, celui-ci est fermé par l'élément (27) d'étanchéité et le courant de fluide dans le conduit (26) d'écoulement est arrêté.

12. Dispositif suivant l'une des revendications 1 à 11, **caractérisé en ce que** le conduit (26) d'écoulement du dispositif a une ou plusieurs ouvertures pour le passage du courant de fluide, dans lequel, après un déplacement entre les surfaces et sur l'une des ouvertures de la une ou des plusieurs ouvertures du conduit (26) d'écoulement vers l'une des surfaces, l'élément (27) d'étanchéité est mis en position dans le conduit d'écoulement, de manière à ce que le courant de fluide dans le conduit (26) d'écoulement soit arrêté ou autorisé.

13. Dispositif suivant l'une des revendications 1 à 12, **caractérisé en ce que** le dispositif a deux surfaces disposées concentriquement à un axe longitudinal du dispositif, qui sont perpendiculaires ou inclinés par rapport à l'axe longitudinal, ou a une rainure, et dans lequel, dans au moins l'une des surfaces ou dans la rainure sont constituées plusieurs ouvertures disposées annulairement, dans lequel, dans la position fermée de l'élément (27) d'étanchéité, un courant de fluide dans au moins l'une des ouvertures est arrêté par un élément (27) d'étanchéité disposé annulairement entre les surfaces ou dans la rainure, qui entoure les ouvertures disposées annulairement et, dans la position ouverte de l'élément (27) d'étanchéité, un courant de fluide dans au moins l'une des ouvertures est autorisé, par le fait que l'élément (27) d'étanchéité annulaire est disposé de manière à ce qu'au moins une partie de l'élément (27) d'étanchéité se trouve entre la au moins une ouverture et l'axe longitudinal du dispositif (10).

14. Dispositif suivant l'une des revendications 1 à 13, **caractérisé en ce que** l'élément (27) d'étanchéité peut être déplacé au moyen d'un courant de fluide de la position ouverte à la position fermée ou de la position fermée à la position, ou **en ce que** l'élément (27) d'étanchéité peut, par son élasticité, passer de la position fermée à la position ouverte ou de la position ouverte à la position fermée.

15. Dispositif suivant l'une des revendications 1 à 14, dans lequel une autre partie du conduit (26) d'écoulement, qui est opposée à la une partie, est formée par une partie d'un filtre, d'une enveloppe de filtre ou d'un dispositif de traitement de l'air.
